# EUROPEAN PATENT APPLICATION

(11) **EP 3 339 629 A1**
(43) Date of publication of application: **27.06.2018**
(21) Application number: 16206025.5
(22) Date of filing: 21.12.2016
(51) Int. Cl.: F03B 13/26, E02B 9/08, E02D 15/08

(54) **A HYDROELECTRIC TURBINE DEPLOYMENT AND RECOVERY SYSTEM AND METHOD**

(71) Applicant: Openhydro IP Limited, Dublin 1 (IE)
(72) Inventor: Doyle, Tom, Dublin, 9 (IE); Jackson, Richard, County Kilkenny (IE); Hayes, Darren, Dublin, 3 (IE)
(74) Representative: FRKelly

(57) **Abstract**

The present invention provides a system and method for the deployment and recovery of a hydroelectric turbine system (S), the method involving releasably securing a recovery frame (14) in spaced relationship to a lifting frame (16) such as to define a frame assembly (12) within which the hydroelectric turbine system (S) may be carried, securing the frame assembly (12) to the turbine system (S), and then lifting the hydroelectric turbine system (S) with a first lifting hook connected via a sling to the lifting frame (16).

## Description

### Field of the invention

The present invention relates to a hydroelectric turbine deployment and recovery system and method which is particularly suited for use with one or more heavy lift cranes or the like.

### Background of the invention

Due to the environmental damage that has been inflicted on the planet as a result of the burning of fossil fuels, renewable energy has finally begun to be given significant attention, with many projects being developed around solar energy, wind energy, and tidal power. Of these alternative forms of energy, tidal power is arguably the most attractive, given that tidal flows are entirely predictable and constant, unlike wind or solar energy which are relatively intermittent and therefore less dependable.

However, harnessing tidal energy does provide its own challenges, in particular with respect to the installation, maintenance and retrieval of tidal power generators, for example hydro-electric turbines, which by the very nature of the operation of same must be located in relatively fast flowing tidal currents, and more than likely located on the seabed. In addition, in order to be economically viable these turbines must be built on a large scale. As a result the turbines and associated bases/supports are large components, and require heavy lifting and transport equipment in order to achieve both deployment and recovery thereof. The use of such heavy lifting equipment is normally a hazardous undertaking, and is rendered even more dangerous when this equipment is operated at sea under difficult and unsteady conditions.

The above processes are further complicated by an increasing shortage in the market of suitable vessels and equipment to perform such work and the extreme danger of engaging divers in high tidal flow sites.

It is therefore an object of the present invention to provide a system and method for the deployment and recovery of a hydroelectric turbine system which enables the use of one or a pair of heavy lift cranes.

### Summary of the invention

According to a first aspect of the present invention there is provided a hydroelectric turbine system deployment and recovery method comprising the steps of:
releasably securing a recovery frame in spaced relationship to a lifting frame to define a frame assembly;
releasably securing the frame assembly to the turbine system; and
lifting the hydroelectric turbine system with a first lifting hook connected via a sling to the lifting frame.

Preferably, the method comprises the use of a second lifting hook connected to the lifting frame at a position remote from the first lifting hook; and adjusting the orientation of the hydroelectric turbine system using the second lifting hook.

Preferably, the method comprises securing the frame assembly to the lifting frame at multiple connection points.

Preferably, the method comprises the steps of transporting the hydroelectric turbine system to or from a deployment site; and lowering or raising the hydroelectric turbine system onto or off a subsea deployment surface without lowering the first lifting hook into the water.

Preferably, the method comprises lowering the hydroelectric turbine system such that one leg of the hydroelectric turbine system contacts the subsea deployment surface in advance of other legs of the system.

Preferably, the method comprises rotating the hydroelectric turbine system into a desired orientation about the one lowered leg; and then lowering the other legs into contact with the subsea deployment surface.

Preferably, the method comprises the step of electrically connecting a power transmission cable to the hydroelectric turbine system prior to lowering the system onto the subsea deployment surface.

Preferably, the method comprises comprising testing one or more electrical systems of the hydroelectric turbine once the power transmission cable has been electrically connected to the hydroelectric turbine system.

Preferably, the method comprises at least partially lowering the hydroelectric turbine system into water; displacing the hydroelectric turbine system in the water in order to generate electricity; and testing the electrical operation of the hydroelectric turbine system.

Preferably, the method comprises utilising a lift barge on which at least a first crane controlling at least the first lifting hook is located.

Preferably, the method comprises utilising a second crane provided on the lift barge for use in orienting the hydroelectric turbine system during deployment or recovery.

Preferably, the method comprises deploying the hydroelectric turbine into a tidal body of water; and lowering the hydroelectric turbine system into the water at a position which is, relative to the direction of tidal flow, substantially downstream of the lift barge.

Preferably, the method comprises transporting the hydroelectric turbine system on a transport vessel prior to securing the frame assembly to the turbine system.

Preferably, the method comprises the step of feeding the power transmission cable from the transport vessel as the hydroelectric turbine system is lowered into the water.

Preferably, the recovery frame and lifting frame are connected via at least one actuator, the method comprising utilising the actuator to adjust the orientation of the hydroelectric turbine system.

Preferably, the method comprises the step of arresting lateral displacement of the recovery frame, when substantially aligned with the hydroelectric turbine system, through contact with the hydroelectric turbine system of a buffer mounted to the recovery frame.

Preferably, the method comprises recovering the hydroelectric turbine system from a subsea deployment surface by lowering the frame assembly into a position laterally adjacent the turbine prior to releasably securing the frame assembly to the turbine system; advancing the recovery frame into contact with the turbine in order to align the frame assembly and the turbine; further lowering the frame assembly before releasably securing the frame assembly to the turbine.

According to a second aspect of the invention there is provided a hydroelectric turbine system deployment and recovery system comprising a frame assembly adapted to be releasably secured to the hydroelectric turbine system; the frame assembly comprising a recovery frame and a lifting frame securable in spaced relationship to the recovery frame.

Preferably, the frame assembly comprises at least one remotely operable coupling adapted to be releasably engaged with the hydroelectric turbine system.

Preferably, the deployment and recovery system comprises at least one actuator connecting the frame assembly and the lifting frame.

Preferably, the deployment and recovery system comprises a lift vessel comprising a first crane adapted to lift the hydroelectric turbine system by means of a first lifting hook connected via a sling to the lifting frame.

Preferably, the deployment and recovery system comprises a second crane operable to control the orientation of the hydroelectric turbine system.

Preferably, the lift vessel comprises a portal through which the hydroelectric turbine system may be raised or lowered.

Preferably, the deployment and recovery system comprises a transport vessel on which the hydroelectric turbine system may be supported during transport to or from a deployment site.

### Brief description of the drawings

The present invention will now be described with reference to the accompanying drawings, in which:
Figure 1 illustrates a schematic perspective view of a hydroelectric turbine system deployment and recovery system for use in both deploying and recovering a hydroelectric turbine system, and using a single hoisting sling;

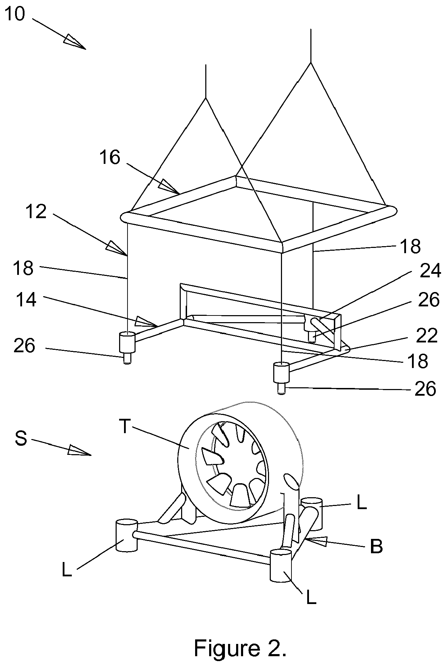

Figure 2 illustrates the deployment and recovery system illustrated in Figure 1, utilising a pair of slings with which to lift the hydroelectric turbine system;
Figure 3 illustrates the deployment and recovery system being lowered from a lift vessel forming part of the deployment and recovery system, the lift vessel being in a first orientation with respect to the direction of tidal flow, and omitting the hydroelectric turbine system for clarity;
Figure 4 illustrates the deployment and recovery system being lowered from the lift vessel which is in a second orientation with respect to the direction of tidal flow;
Figure 5 illustrates the deployment and recovery assembly being lowered towards a deployment site and tilted so that one leg of the hydroelectric turbine system will contact the subsea surface before the remaining leg;
Figure 6 illustrate an arrangement of a tug, lift vessel and a transport vessel with the hydroelectric turbine system thereon, all arranged in line with one another with respect to the direction of tidal flow.

### Detailed description of the drawings

Referring now to the accompanying drawings there is illustrated a hydroelectric turbine deployment and recovery system, generally indicated as 10, for use in deploying and/or retrieving a hydroelectric turbine system S, preferably in a single operation, to or from a subsea deployment surface such as the seabed or the like.

The hydroelectric turbine system S comprises at least a subsea base B and preferably also a hydroelectric turbine T mounted to the subsea base B in known fashion. The deployment and recovery system 10 and methodology of the present invention may however be utilised to deploy the subsea base B in isolation from the turbine T, which may be subsequently lowered into position onto the subsea base B once the subsea base B has been suitably located on the seabed. Thus reference to the hydroelectric turbine system S hereinafter should be understood to mean either the subsea base B in isolation or the combination of the subsea base B and the hydroelectric turbine T mounted thereto.

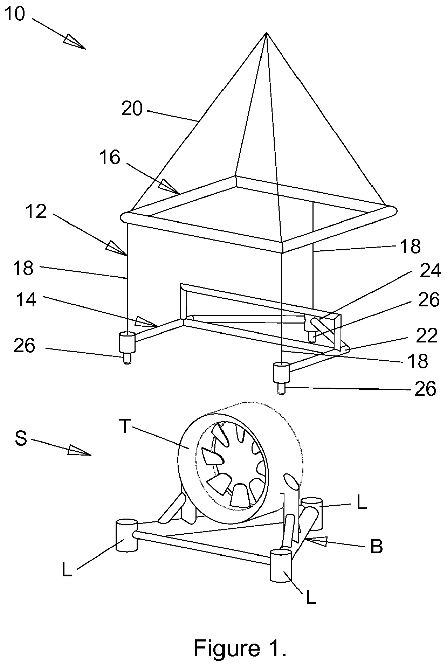

The deployment and recovery system 10 primarily comprises a frame assembly 12 which is made up of a lower recovery frame 14 which is adapted to be directly secured to the subsea base B as will be described hereinafter, and a lifting frame 16 which is secured in spaced relationship to the recovery frame 14, preferably by means of an array of substantially vertically extending connecting members 18. This arrangement allows, as illustrated in Figure 1, a single lifting hook (not shown) to be secured via a single hook sling arrangement 20 to the lifting frame 16, the combination of the recovery frame 14 and the lifting frame 16 effectively defining an enclosure within which the hydroelectric turbine system S can be contained below the sling arrangement 20 and associated lifting hook when connected thereto. Thus the hydroelectric turbine system S may be deployed and/or recovered using a single lifting hook, although as described hereinafter it may be desirable to use a second lifting hook (not shown) in order to allow the orientation of the hydroelectric turbine system S to be adjusted during the deployment and/or recovery process.

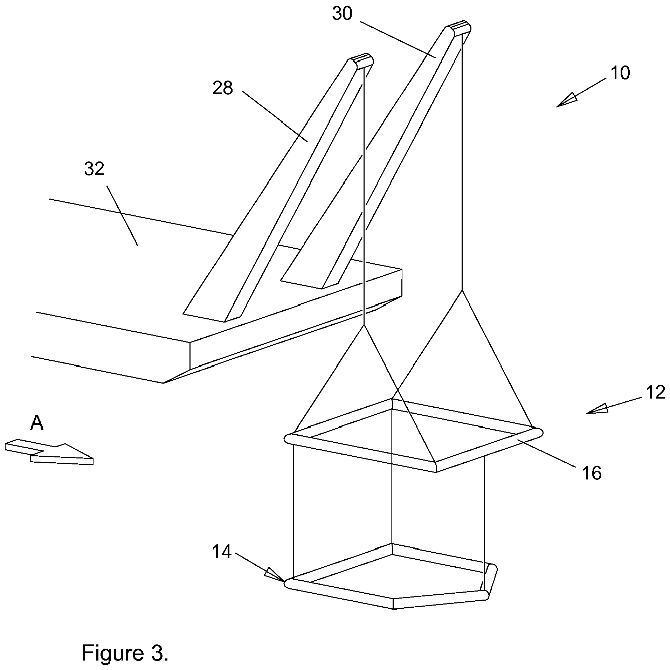

In the preferred embodiment illustrated the recovery frame 14 is substantially U shaped in plan and includes a pair of arms 22 that, in the latter half thereof, taper towards one another and are connected at an apex 24 The free ends of the arms 22 define a mouth of the recovery frame 14 that permits access to a docking space defined by the recovery frame 14, thus allowing the recovery frame 14 and thus the frame assembly 12 to be advanced laterally into position about the hydroelectric turbine system S as will be described in detail hereinafter. This is particularly beneficially during recovery of the hydroelectric turbine system S due to a lack of visibility arising from the submersion of the hydroelectric turbine system S. However it is also envisaged that the recovery frame 14 could be provided as a closed arrangement, for example having an additional beam or cross member extending between the free ends of the arms 22, an example of which is illustrated schematically in Figure 3. This arrangement would require the recovery frame 14 to be lowered vertically into position about the turbine system S. The lifting frame 16 is preferably provided as a closed arrangement in order to provide sufficient strength and stiffness in order to be capable of carrying the combined recovery frame 14 and turbine system S suspended therebeneath. However with suitable structural modifications an open framed arranged could be employed for the lifting frame 16 if required.

The frame assembly 12 additionally comprises a plurality of couplers 26, and in the preferred embodiment illustrated three of the couplers 26, one at or adjacent the free end of each of the arms 20, with the third coupler 26 located at the apex 24. The subsea base B is provided, again in the preferred embodiment illustrated, with three vertical legs L which each define a cooperating and correspondingly positioned sleeve for receiving a respective coupler 26. The legs L preferably form an integral part of the subsea base B and are capable of bearing the combined load of the subsea base B and the turbine T when mounted thereto. Although in the embodiment illustrated the legs L define the connection points for the couplers 26 it will be appreciated that alternative locations may be provided at which the couplers 26 engage the subsea base B. In addition in the embodiment illustrated the couplers 26 each comprise a lifting tool of known design which comprises a cylindrical body from which an array of gripping elements (not shown) project and covering a substantial area of the outer surface of the body, and which may be displaced outwardly from within the coupler 26 to stand proud of the outer surface, preferably via hydraulic actuation. Such a lifting tool is generally referred to as a "ball grab". In use the gripping members are positioned internally of the respective coupler 26 and are then displaced outwardly once the coupler 26 has been inserted into the sleeve defined by the leg L of the subsea base B. The hydraulic or other power to effect operation of the couplers 26 may be provided in parallel to or integrated with the connecting members 18, or by any other suitable means. The couplers 26 may be secured to the recovery frame 14 via floating mountings (not shown) which will allow some play in order to reduce the accuracy required to effect registration of the couplers 26 with the sleeves defined by the legs L.

The frame assembly 12 can thus be used to raise or lower the hydroelectric turbine system S, whether retrieving the turbine system S from a quay side or other "dry" location for transport to a deployment site, or to retrieve the turbine system S from a deployment site on the seabed or the like, hereinafter referred to as a "wet" location. When connecting the frame assembly 12 in a dry location it will normally be possible to lower the frame assembly 12 vertically about the turbine system S until the couplers 26 locate vertically downward into each of the legs L of the subsea base B. At that point the couplers 26 may be engaged in order to grip the interior of the legs L to allow the turbine system S to be raised, for example using at least a first heavy lift crane 28, and optionally a second heavy lift crane 30 adjacent the first crane 28. By connecting the first and second cranes 28, 30 at remote or spaced locations on the lifting frame 16 it is possible to not only raise and lower the hydroelectric turbine system S but also to adjust the pitch or tilt of the subsea base B in particular such that one of the legs L is lower than the remaining two legs as the hydroelectric turbine system S is being lowered towards a wet deployment site. This allows the lower of the legs L to contact the seabed first, and to then act as a pivot point about which the hydroelectric turbine system S may be rotated until it is lying in a desired orientation, generally such that an axis of rotation of the turbine T is generally in line with the direction of the prevailing tidal flow. Once correctly orientated the remaining two legs L may then be lowered onto the seabed through the operation of the first crane 28, the second crane 30, or a combination of the two. Rotation of the hydroelectric turbine system S on the lowered leg L may be effected through the action of the passing tidal flow of water, or through operation of the cranes 28, 30 or displacement of the lift vessel 32.

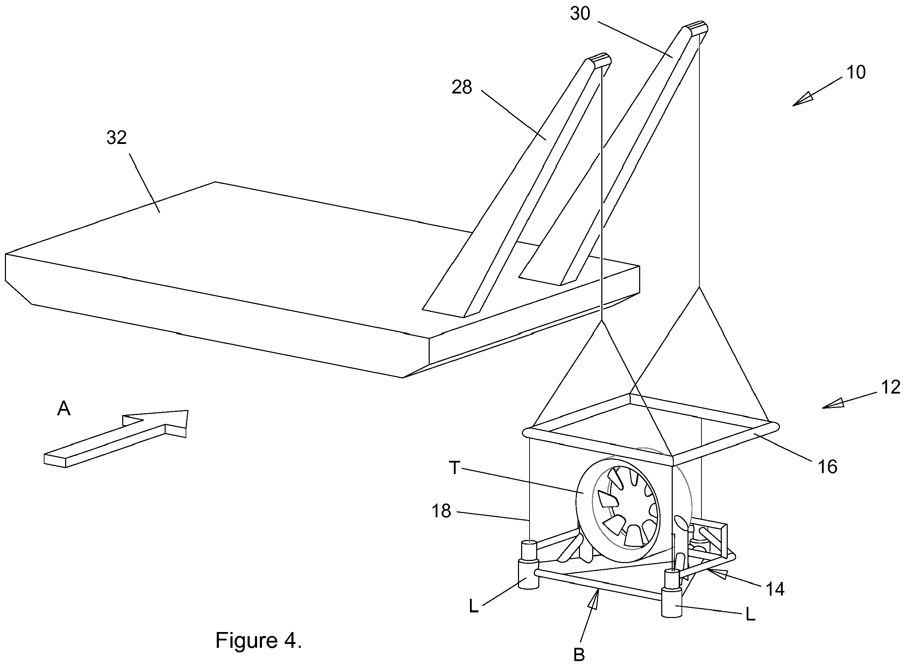

The first crane 28, and the second crane 30 when being used, are thus preferably provided on a lift vessel 32 which may be towed or otherwise displaced to the deployment site in order to then lower the hydroelectric turbine system S or alternatively to recover the turbine system S from the seabed. The lift vessel 32 may be positioned during the deployment or recovery method such that the first and second cranes 28, 30 and thus the first and second lifting hooks (not shown) are located in parallel to one another with respect to the direction of tidal flow A, as illustrated in Figure 3, or alternatively in series with one another with respect to the direction of tidal flow A, as illustrated in Figure 4, which shows the second crane 28 positioned down stream of the first crane 26. The tidal flow A can then be used to augment the deployment or recovery methodology by acting on the hydroelectric turbine system S and the frame assembly 12 as they are raised or lowered through the water.

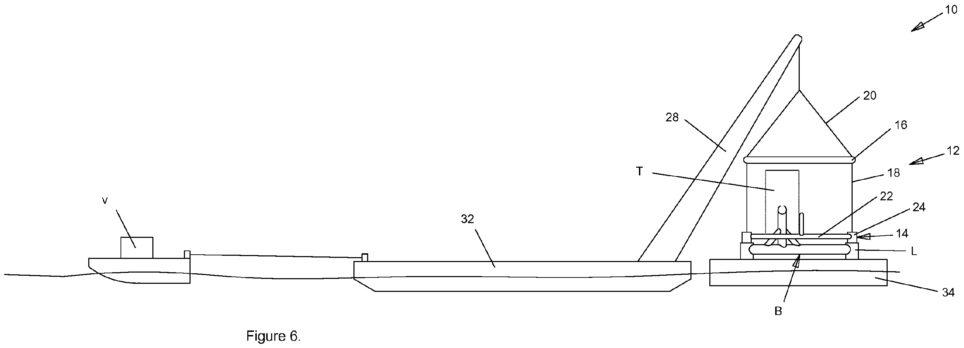

In a particularly preferred embodiment as illustrated in Figure 6 the deployment and recovery system 10 comprises the lift vessel 32 which is towed directly downstream of a tug V, the frame assembly 12 and hydroelectric turbine system S being located directly downstream of the lift vessel 32. In this way the tidal flow can be used to hold these three components of the system in line with one another and the tug V can then be used to maintain the position of the lift vessel 32 relative to the deployment site during the deployment and/or recovery process. As an additional component the deployment and recovery system 10 may be provided with a transport vessel 34 on which the hydroelectric turbine system S and connected frame assembly 12 may be carried during transport to or from the deployment site, depending on whether the hydroelectric turbine system S is being deployed or recovered. The transport vessel 34 is tethered downstream of the lift vessel 32 and again the tidal flow can be used to maintain this relative positioning. The use of the transport vessel 34 is particularly beneficial when the lift vessel 32 is of conventional design whereby there is little deck space available on the lift vessel 32 and/or the range of motion of the first crane 28 and optionally second crane 30 is extremely limited and would thus prevent the hydroelectric turbine system S from being lifted and swung off any deck space that may be available on the lift vessel 32.

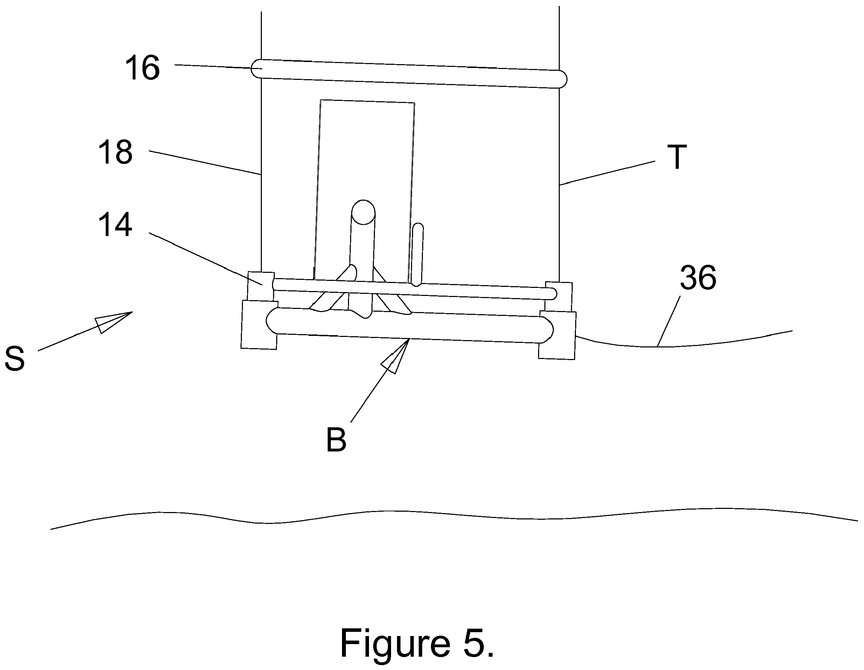

The use of the transport vessel 34 provides a further advantage whereby cable laying equipment (not shown) may be provided on or about the transport vessel 34 thereby allowing a dry electrical connection to be established between a power transmission cable 36 (Figure 5) and the hydroelectric turbine system S prior to deployment onto the seabed. Then as the hydroelectric turbine system S is lowered towards the seabed electrical cable may be fed from the transport vessel 34. Alternatively the power transmission cable 36 may have be pre-laid on the seabed at the deployment site and may then be raised prior to deployment of the hydroelectric turbine system S and again a dry electrical connection established on board the transport vessel 34 as a dry location at which this work can be undertaken. By establishing a grid connection prior to lowering the hydroelectric turbine system S onto the seabed a large amount of electrical testing can be undertaken prior to deployment, allowing any issues to be identified and addressed before the hydroelectric turbine system S is located on the seabed, which might otherwise require recovery to address any such issues. In addition it is also possible to partly or wholly submerge the turbine T into the water, at which point the lift vessel 32 may be displaced through the water in order to draw the turbine T through the water and thus effect rotation thereof. Thus the turbine T can begin to operate and generate electricity in order to allow electrical testing of various aspects of the turbine T, when actively generating electricity, prior to the installation thereof on the seabed or other subsea deployment surface.

As described above the use of the first crane 28 and the second crane 30 allows the orientation of the hydroelectric turbine system S to be adjusted, in particular to allow the subsea base B to be tilted such that a single leg L will contact the seabed ahead of the remaining legs L. As an alternative or additional level of adjustability, one or more of the connecting members 18 may be length adjustable such as to define an actuator which will enable the orientation of the subsea base B, in particular the tilt or inclination of the base B, to be adjusted by adjusting the length of that connecting members 18 relative to the remaining connecting members 18. Such an actuator could simply be a winch to adjust the length of the line defining the connecting member 18, or an alternative actuator could take the form of one or more hydraulic jacks (not shown) or the like connected between the recovery frame 14 and the lifting frame 16.

Providing the frame assembly 12 with the recovery frame 14 suspended beneath the lifting frame 16 facilitates the use of conventional heavy lift cranes such as the first crane 28 and the second crane 30. In addition, by providing the connecting members 18 of a suitable length, in addition to the sling, it is possible to maintain the lifting hook (not shown) of the first crane 28 and second crane 30 when utilised, out of the water in order to reduce the cost and complexity of the deployment or recovery operation. These dimensions will vary depending on the depth of the deployment site at which the hydroelectric turbine system S is located.

When utilising the frame assembly 12 to recover the hydroelectric turbine system S from the seabed, it will be appreciated that the above mentioned procedures can simply be reversed. However in a particularly preferred method of recovering the turbine system S, the frame assembly 12 is lowered from the lift vessel 32 to a depth at which the couplers 26 are located slightly above the tops of the legs L and the recovery frame 14 is positioned upstream or downstream of the front/rear of the turbine T. The frame assembly 12 can then be slowly advanced horizontally towards the turbine T, either by allowing the frame assembly 12 to be displaced by the tidal flow, or through movement of the lift vessel 32, until the recovery frame contacts the front/rear of the turbine T. As the recovery frame 14 is advanced horizontally towards the turbine T the outwardly flared arms 22 will receive the turbine T therebetween and further advancement of the frame assembly 12 will act to draw the recovery frame 14 into correct alignment with the subsea base B, which is preferably completed through contact of the recovery frame 14 with the front/rear face of the turbine T.

At this point the frame assembly 12 can be further lowered such that the couplers 26 are lowered into the legs L. The couplers 26 can then be engaged allowing the hydroelectric turbine system S to be lifted off the seabed to be recovered to the lift vessel 32 or the transport vessel 34.

## Claims

1. A hydroelectric turbine system deployment and recovery method comprising the steps of:
releasably securing a recovery frame in spaced relationship to a lifting frame to define a frame assembly;
releasably securing the frame assembly to the turbine system; and
lifting the hydroelectric turbine system with a first lifting hook connected via a sling to the lifting frame.

2. A method according to claim 1 comprising the use of a second lifting hook connected to the lifting frame at a position remote from the first lifting hook; and adjusting the orientation of the hydroelectric turbine system using the second lifting hook.

3. A method according to any preceding claim comprising securing the frame assembly to the lifting frame at multiple connection points.

4. A method according to any preceding claim comprising the steps of transporting the hydroelectric turbine system to or from a deployment site; and lowering or raising the hydroelectric turbine system onto or off a subsea deployment surface without lowering the first lifting hook into the water.

5. A method according to claim 4 comprising lowering the hydroelectric turbine system such that one leg of the hydroelectric turbine system contacts the subsea deployment surface in advance of other legs of the system.

6. A method according to claim 5 comprising rotating the hydroelectric turbine system into a desired orientation about the one lowered leg; and then lowering the other legs into contact with the subsea deployment surface.

7. A method according to any of claims 4 to 6 comprising the step of electrically connecting a power transmission cable to the hydroelectric turbine system prior to lowering the system onto the subsea deployment surface.

8. A method according to claim 7 comprising testing one or more electrical systems of the hydroelectric turbine once the power transmission cable has been electrically connected to the hydroelectric turbine system.

9. A method according to claim 7 or 8 comprising at least partially lowering the hydroelectric turbine system into water; displacing the hydroelectric turbine system in the water in order to generate electricity; and testing the electrical operation of the hydroelectric turbine system.

10. A method according to any preceding claim comprising utilising a lift barge on which at least a first crane controlling at least the first lifting hook is located.

11. A method according to claim 10 comprising utilising a second crane provided on the lift barge for use in orienting the hydroelectric turbine system during deployment or recovery.

12. A method according to claim 10 or 11 comprising deploying the hydroelectric turbine into a tidal body of water; and lowering the hydroelectric turbine system into the water at a position which is, relative to the direction of tidal flow, substantially downstream of the lift barge.

13. A hydroelectric turbine system deployment and recovery assembly comprising a frame assembly adapted to be releasably secured to the hydroelectric turbine system; the frame assembly comprising a recovery frame and a lifting frame securable in spaced relationship to the recovery frame.

14. A hydroelectric turbine system deployment and recovery assembly according to claim 13 in which the frame assembly comprises at least one remotely operable coupling adapted to be releasably engaged with the hydroelectric turbine system.

15. A hydroelectric turbine system deployment and recovery assembly according to claim 13 or 14 comprising a at least one actuator connecting the frame assembly and the lifting frame.
